# EUROPEAN PATENT APPLICATION

(11) **EP 3 040 448 A1**
(43) Date of publication of application: **06.07.2016**
(21) Application number: 14839925.6
(22) Date of filing: 18.08.2014
(51) Int. Cl.: C25B 9/00, B01J 23/46, B01J 23/648, C25B 1/10, C25B 3/04, C25B 11/04, C25B 11/08, C25B 11/10, C25B 15/08

(54) **ELECTROCHEMICAL REDUCTION DEVICE**

(30) Priority: 30.08.2013 JP 2013179556
(71) Applicant: JX Nippon Oil & Energy Corporation, Chiyoda-ku Tokyo 100-8162 (JP)
(72) Inventor: SATO, Yasushi, Tokyo 100-8162 (JP); MIYOSHI, Kota, Tokyo 100-8162 (JP); NAKAGAWA, Kojiro, Tokyo 100-8162 (JP); KOBORI, Yoshihiro, Tokyo 100-8162 (JP); OSHIMA, Shinji, Tokyo 100-8162 (JP)
(74) Representative: Algemeen Octrooi- en Merkenbureau B.V.
(86) International application number: PCT/JP2014/004212
(87) International publication number: WO 2015/029367

(57) **Abstract**

This electrochemical reduction device (10) is provided with an electrode unit (100), a power controller (20), an organic-material storage tank (30), a water storage tank (40), a steam separator (50), and a controller (60). The electrode unit (100) comprises an electrolyte membrane (110), a reducing electrode (120), and an oxygen-generating electrode (130). The oxygen-generating electrode (130) has the following: an electron-conducting metal substrate; a protective layer that covers said metal substrate and contains at least one metal or metal oxide selected from among niobium (oxides), molybdenum (oxides), tantalum (oxide), and tungsten (oxides); and a catalyst that is supported on the surface of the protective layer and contains at least one metal or metal oxide selected from among ruthenium (oxides), rhodium (oxides), palladium (oxide), iridium (oxide), and platinum (oxides).

## Description

### Technical Field

The present invention relates to a technique for electrochemically hydrogenating an aromatic compound.

### Background Art

It is known that a cyclic organic compound such as cyclohexane or decalin can be efficiently obtained by hydrogenating at least one benzene ring of a corresponding aromatic hydrocarbon compound (benzene or naphthalene) with the use of hydrogen gas. This reaction requires reaction conditions of high temperature and high pressure, and hence it is not suitable for small and medium scale manufacturing of cyclic organic compounds. It is also known that, on the other hand, an electrochemical reaction using an electrolysis cell proceeds without gaseous hydrogen being required and under relatively mild reaction conditions (from normal temperature to approximately 200°C and normal pressure) because water can be used as a hydrogen source.

### Related Art Documents

### Patent Documents

[Patent Document 1] JP 2003-045449
[Patent Document 2] JP 2005-126288
[Patent Document 3] JP 2005-239479

### DISCLOSURE OF THE INVENTION

### Problem to be Solved by the Invention

As an example in which a benzene ring of an aromatic hydrocarbon compound such as toluene is electrochemically hydrogenated, a method is reported, in which toluene that has been vaporized into a gaseous state is sent to the reduction electrode side to obtain methylcyclohexane, a benzene-ring hydrogenated substance (hydride), without going through a state of hydrogen gas in a configuration similar to that of water electrolysis (see Patent Document 1). In this method, however, the amount of substance that can be transformed per electrode area or time (current density) is not large, and it has been difficult to industrially produce a hydride of an aromatic hydrocarbon compound.

In order to address the problem, the present inventors have studied a method in which a liquid aromatic hydrocarbon compound is directly introduced into the reduction electrode side of an electrolysis cell. This method has the advantage that an electrolytic hydride-producing reaction can be caused to proceed at a higher current density in comparison with a method in which a vaporized aromatic hydrocarbon compound is introduced. However, a technique for improving the life of an electrolysis cell, in which a hydride-producing reaction for an aromatic hydrocarbon compound supplied in a liquid state is performed, has not been studied sufficiently, and there remains a challenge to be addressed.

The present invention has been made in view of such a challenge, and a purpose of the invention is to provide a technique for improving the life of a device in which a hydride of an aromatic compound is produced at a high efficiency by an electrochemical reaction.

### Means for Solving the Problem

An aspect of the present invention is an electrochemical reduction device. The electrochemical reduction device comprises: an electrolyte membrane having proton conductivity; a reduction electrode that is provided in contact with one major surface of the electrolyte membrane and contains a reduction catalyst for producing a hydride of an aromatic compound; an oxygen generating electrode provided in contact with the other major surface of the electrolyte membrane; a raw material supplier that supplies the aromatic compound in a liquid state to the reduction electrode; a moisture supplier that supplies water or humidified gas to the oxygen generating electrode; and a power controller that externally applies an electric field such that the reduction electrode has an electronegative potential and the oxygen generating electrode has an electropositive potential, in which the oxygen generating electrode has: an electron conductive metal substrate; a protective layer that contains one or two or more metals or metal oxides, the metal (metals) being selected from the group consisting of Nb, Mo, Ta, and W, and that covers the metal substrate; and a catalyst that contains one or two or more metals or metal oxides, the metal (metals) being selected from the group consisting of Ru, Rh, Pd, Ir, and Pt, and that is held on the surface of the protective layer.

In the electrochemical reduction device of the aforementioned aspect, the metal substrate may be a molded body selected from the group consisting of a metal fiber, a sintered body of a porous metal, a foamed molded body, and an expanded metal. The metal substrate may contain titanium. The catalyst may be iridium oxide.

Combinations of the aforementioned respective elements will also be within the scope of the present invention sought to be patented by the present patent application. Advantage of the Invention

According to the present invention, the life of a device, in which a hydride of an aromatic compound can be produced at a high efficiency by an electrochemical reaction, can be improved.

### BRIEF DESCRIPTION OF THE DRAWINGS

Fig. 1 is a schematic view illustrating a schematic configuration of an electrochemical reduction device according to an embodiment;
Fig. 2 is an exploded perspective view illustrating a schematic configuration of an electrode unit included in the electrochemical reduction device according to an embodiment;
Fig. 3 is a side view illustrating a schematic configuration of an electrode unit included in the electrochemical reduction device according to an embodiment;
Fig. 4 is a schematic view illustrating an enlarged example of a sectional structure of an oxygen generating electrode; and
Fig. 5 is a graph showing transitions of the potentials and overpotentials of the oxygen generating electrodes in respective electrode units of Example 1 and Comparative Example 1.

### BEST MODE FOR CARRYING OUT THE INVENTION

Hereinafter, embodiments of the present invention will now be described with reference to the drawings. In the figures, like numerals represent like constituting elements and the description thereof will be appropriately omitted.

### (Embodiment)

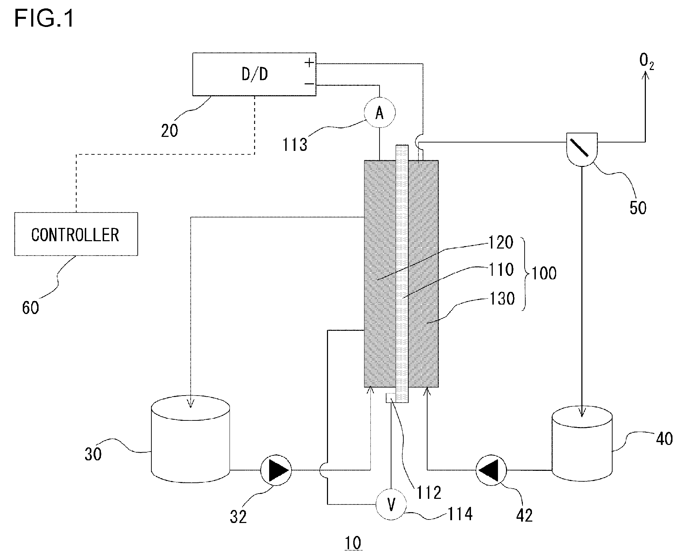

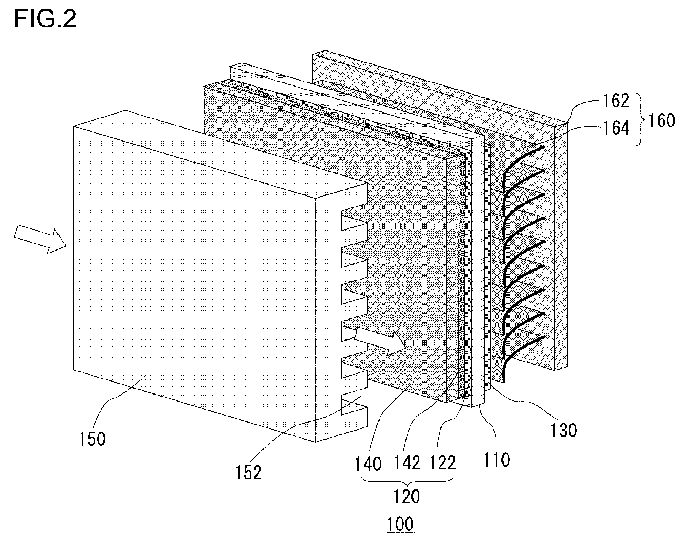

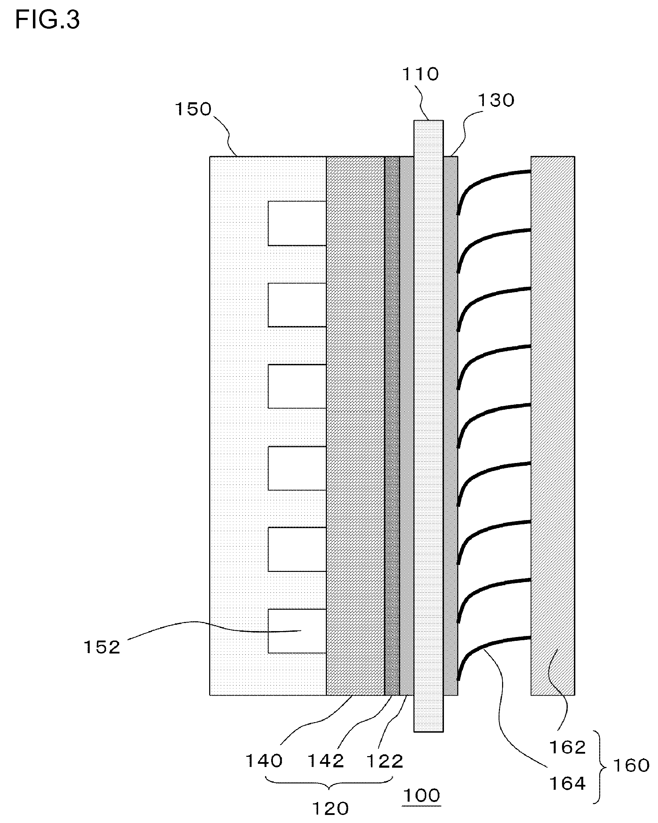

Fig. 1 is a schematic view illustrating a schematic configuration of an electrochemical reduction device 10 according to an embodiment. Fig. 2 is an exploded perspective view illustrating a schematic configuration of an electrode unit included in the electrochemical reduction device 10 according to an embodiment. Fig. 3 is a side view illustrating a schematic configuration of an electrode unit included in the electrochemical reduction device 10 according to an embodiment.

As illustrated in Fig. 1, the electrochemical reduction device 10 includes an electrode unit 100, a power controller 20, an organic material storage tank 30, a water storage tank 40, a gas-water separation unit 50, and a controller 60.

The power controller 20 is, for example, a DC/DC converter for converting the output voltage of a power source into a predetermined voltage. The positive electrode output terminal of the power controller 20 is connected to an oxygen generating electrode (positive electrode) 130 of the electrode unit 100. The negative electrode output terminal of the power controller 20 is connected to a reduction electrode (negative electrode) 120 of the electrode unit 100. Thereby, a predetermined voltage is applied between the oxygen generating electrode 130 and the reduction electrode 120 of the electrode unit 100. A reference pole may be provided in the power controller 20 in order to detect the potentials of the positive and negative electrodes. A reference pole input terminal is connected to a reference electrode 112 provided on the later-described electrolyte membrane 110. The outputs of the positive electrode output terminal and the negative electrode output terminal of the power controller 20 are controlled by the controller 60 such that the potentials of the oxygen generating electrode 130 and the reduction electrode 120 become desired ones based on the potential of the reference electrode 112. A power source is not particularly limited, and normal system power may be used, or electrical power derived from natural energy such as sunlight or wind power can also be used preferably.

The organic substance storage tank 30 stores an aromatic compound. The aromatic compound used in the present embodiment is an aromatic hydrocarbon compound or a nitrogen-containing heterocyclic aromatic compound, which contains at least one aromatic ring. Examples of the aromatic compound include, for example, benzene, naphthalene, anthracene, diphenylethane, pyridine, pyrimidine, pyrazine, quinoline, isoquinoline, N-alkylpyrrole, N-alkylindole, N-alkyldibenzopyrrole, and the like. From one to four hydrogen atoms of an aromatic ring of any one of the aforementioned aromatic hydrocarbon compounds or nitrogen-containing heterocyclic aromatic compounds may be substituted by alkyl groups. However, the "alkyl" of any one of the aromatic compounds is a C₁₋₆ straight or branched alkyl group. For example, alkylbenzenes include toluene, ethyl benzene, and the like, dialkylbenzenes include xylene, diethylbenzene, and the like, and trialkylbenzenes include mesitylene and the like. Alkylnaphthalenes include methylnaphthalene. An aromatic ring of any one of the aromatic hydrocarbon compounds or nitrogen-containing heterocyclic aromatic compounds may have from 1 to 3 substituents. In the following description, the aromatic hydrocarbon compounds and the nitrogen-containing heterocyclic aromatic compounds may be collectively referred to as "aromatic compounds". It is preferable that the aromatic compound is a liquid at room temperature. When a mixture of two or more of the aforementioned aromatic compounds is used, the mixture should be a liquid. Consequently, the aromatic compound can be supplied to the electrode unit 100 in a liquid state without being heated, pressurized, or the like, and hence the configuration of the electrochemical reduction device 10 can be simplified. The concentration of the aromatic hydrocarbon compound in a liquid state is 0.1% or more, preferably 0.3% or more, and more preferably 0.5% or more.

The aromatic compound stored in the organic material storage tank 30 is supplied to the reduction electrode 120 of the electrode unit 100 by a first liquid supplier 32. As the first liquid supplier 32, for example, various types of pumps such as a gear pump or a cylinder pump, or a gravity flow device or the like can be used. As the aromatic compound, an N-substitution product of the aforementioned aromatic compound may be used. A circulation pathway is provided between the organic material storage tank 30 and the reduction electrode 120 of the electrode unit 100. The aromatic compound, a hydride of which has been produced by the electrode unit 100, and an unreacted aromatic compound are stored in the organic material storage tank 30 after passing through the circulation pathway. No gas is generated by a major reaction that proceeds at the reduction electrode 120 of the electrode unit 100, but if gas such as hydrogen is by-produced, a gas-liquid separation device may be provided in the middle of the circulation pathway.

The water storage tank 40 stores, for example, ion exchange water, pure water, an aqueous solution in which an acid such as sulfuric acid is added to ion exchange water or pure water, or the like (hereinafter, they are simply referred to as "water") . The water stored in the water storage tank 40 is supplied to the oxygen generating electrode 130 of the electrode unit 100 by a second liquid supplier 42. As the second liquid supplier 42, for example, various types of pumps such as a gear pump or a cylinder pump, or a gravity flow device or the like can be used, similarly to the first liquid supplier 32. A circulation pathway is provided between the water storage tank 40 and the oxygen generating electrode 130 of the electrode unit 100. The water that has not been reacted in the electrode unit 100 is stored in the water storage tank 40 after passing through the circulation pathway. The gas-water separation unit 50 is provided in the middle of a pathway through which unreacted water is sent back to the water storage tank 40 from the electrode unit 100. With the gas-water separation unit 50, gas such as oxygen generated by the electrolysis of water in the electrode unit 100 is separated from water and discharged to the outside of the system.

As illustrated in Figs. 2 and 3, the electrode unit 100 includes the electrolyte membrane 110, the reduction electrode 120 having a reduction electrode catalyst layer 122, a diffusion layer 140, and a dense layer 142, the oxygen generating electrode 130, a separator 150, and a current collector 160. In Fig. 1, the electrode unit 100 is illustrated in a simplified way in which the separator 150 and the current collector 160 are omitted.

The electrolyte membrane 110 is formed of a material (ionomer) having proton conductivity, and inhibits substances from getting mixed or being diffused between the reduction electrode 120 and the oxygen generating electrode 130 while selectively conducting protons. The thickness of the electrolyte membrane 110 is preferably from 5 to 300 µm, more preferably from 10 to 150 µm, and most preferably from 20 to 100 µm. If the thickness of the electrolyte membrane 110 is less than 5 µm, the barrier property of the electrolyte membrane 110 is deteriorated, so that cross-leaking is likely to occur. On the other hand, if the thickness thereof is more than 300 µm, ion transfer resistance becomes too large, which is not preferred.

The area resistance of the electrolyte membrane 110, that is, the ion transfer resistance per geometric area thereof is preferably 2000 mΩ·cm² or less, more preferably 1000 mΩ·cm² or less, and most preferably 500 mΩ·cm² or less. If the area resistance of the electrolyte membrane 110 is more than 2000 mΩ·cm², proton conductivity may become insufficient. Examples of the material having proton conductivity (i.e., a cation-exchanging ionomer) include perfluorosulfonic acid polymers such as NAFION (registered trademark) and FLEMION (registered trademark). The ion exchange capacity (IEC) of the cation exchange ionomer is preferably from 0.7 to 2 meq/g, and more preferably from 1 to 1.2 meq/g. If the ion exchange capacity thereof is less than 0.7 meq/g, ion conductivity may become insufficient. On the other hand, if the ion exchange capacity of the cation exchange ionomer is more than 2 meq/g, the solubility of the ionomer in water is increased, and hence the strength of the electrolyte membrane 110 may become insufficient.

On the electrolyte membrane 110, the reference electrode 112 may be provided in an area spaced apart from the reduction electrode 120 and the oxygen generating electrode 130 so as to contact the electrolyte membrane 110, as illustrated in Fig. 1. That is, the reference electrode 112 is electrically isolated from the reduction electrode 120 and the oxygen generating electrode 130. The reference electrode 112 is held at a reference electrode potential VRef. Examples of the reference electrode 112 include a standard hydrogen reduction electrode (reference electrode potential VRef = 0 V) and an Ag/AgCl electrode (reference electrode potential VRef = 0. 199 V), but the reference electrode 112 is not limited thereto. When the reference electrode 112 is installed, it is preferable to install it on the surface of the electrolyte membrane 110 on the reduction electrode 120 side.

The current I flowing between the reduction electrode 120 and the oxygen generating electrode 130 is detected by a current detection unit 113 illustrated in Fig. 1. The value of the current I detected by the current detection unit 113 may be inputted to the controller 60 to be used for the control of the power controller 20 by the controller 60.

A potential difference ΔVCA between the reference electrode 112 and the reduction electrode 120 is detected by a voltage detection unit 114 illustrated in Fig. 1. The value of the potential difference ΔVCA detected by the voltage detection unit 114 may be inputted to the controller 60 to be used for the control of the voltage controller 20 by the controller 60.

The reduction electrode 120 is provided in contact with one major surface of the electrolyte membrane 110. The reduction electrode 120 is a laminated body in which the reduction electrode catalyst layer 122, the dense layer 142, and the diffusion layer 140 are laminated in this order from the electrolyte membrane 110 side. The dense layer 142 is not essential, and may be omitted.

The reduction electrode catalyst layer 122 is provided in contact with one major surface of the electrolyte membrane 110. The reduction electrode catalyst layer 122 includes a reduction catalyst for producing a hydride of an aromatic compound. The reduction catalyst used in the reduction electrode catalyst layer 122 contains at least one of Pt and Pd. Additionally, the reduction catalyst may be composed of a metal composition that contains a first catalyst metal (noble metal) made of at least one of Pt and Pd, and one or two or more second catalyst metals selected from the group consisting of Cr, Mn, Fe, Co, Ni, Cu, Zn, Mo, Ru, Sn, W, Re, Pb, and Bi. In this case, the form of the metal composition is an alloy of the first catalyst metal and the second catalyst metal, or an intermetallic compound made of the first catalyst metal and the second catalyst metal. The ratio of the first catalyst metal to the total mass of the first catalyst metal and the second catalyst metals is preferably from 10 to 95 wt%, more preferably from 20 to 90 wt%, and most preferably from 25 to 80 wt%. If the ratio of the first catalyst metal is less than 10 wt%, durability may be deteriorated in terms of resistance to dissolving, and the like. On the other hand, if the ratio of the first catalyst metal is more than 95 wt%, the properties of the reduction catalyst become closer to those of a noble metal alone, and hence the electrode activity may become insufficient. In the following description, the first catalyst metal and the second catalyst metals may be collectively referred to as a "catalyst metal."

The aforementioned catalyst metal may be supported by an electron conductive material (support). The electron conductivity of the electron conductive material is preferably 1.0 × 10⁻² S/cm or more, more preferably 3.0 × 10⁻² S/cm or more, and most preferably 1.0 × 10⁻¹ S/cm or more. If the electron conductivity of the electron conductive material is less than 1.0 × 10⁻² S/cm, sufficient electron conductivity may not be imparted. Examples of the electron conductive material include electron conductive materials containing any one of porous carbon, a porous metal, and a porous metal oxide as a major component. Examples of the porous carbon include carbon black such as KETJEN BLACK (registered trademark), acetylene black, and VULCAN (registered trademark). The BET specific surface area of the porous carbon, measured by a nitrogen adsorption method, is preferably 100 m²/g or more, more preferably 150 m²/g or more, and most preferably 200 m²/g or more. If the BET specific surface area of the porous carbon is less than 100 m²/g, it is difficult to uniformly support the catalyst metal. Accordingly, the rate of utilizing the surface of the catalyst metal is decreased, possibly causing the catalyst performance to be deteriorated. Examples of the porous metal include, for example, Pt black, Pd black, a Pt metal deposited in a fractal shape, and the like. Examples of the porous metal oxide include oxides of Ti, Zr, Nb, Mo, Hf, Ta and W. Besides these, examples of the porous electron conductive material for supporting the catalyst metal include nitrides, carbides, oxynitrides, carbonitrides, partially-oxidized carbonitrides of metals such as Ti, Zr, Nb, Mo, Hf, Ta, and W (hereinafter, they are collectively referred to as porous metal carbonitrides and the like). The BET specific surface areas of the porous metal, the porous metal oxide, the porous metal carbonitrides and the like, measured by a nitrogen adsorption method, are preferably 1 m²/g or more, more preferably 3 m²/g or more, and most preferably 10 m²/g or more. If the respective BET specific surface areas of the porous metal, the porous metal oxide, the porous metal carbonitrides and the like are less than 1 m²/g, it is difficult to uniformly support the catalyst metal. Accordingly, the rate of utilizing the surface of the catalyst metal is decreased, possibly causing the catalyst performance to be deteriorated.

To the reduction electrode catalyst layer 122, a material having electron conductivity, such as the aforementioned electron conductive oxide or carbon black, maybe added separately from the electron conductive compound for supporting the catalyst metal. Thereby, the number of electron-conducting paths among reduction catalyst particles can be increased, and hence the resistance per geometric area of a reduction catalyst layer can be lowered in some cases.

The reduction electrode catalyst layer 122 may contain, as an additive, a fluorine-based resin such as polytetrafluoroethylene (PTFE).

The reduction electrode catalyst layer 122 may contain an ionomer having proton conductivity. The reduction electrode catalyst layer 122 preferably contains, at a predetermined mass ratio, an ion conductive material (ionomer) having a structure that is identical or similar to that of the aforementioned electrolyte membrane 110. Thereby, the ion conductivity of the reduction electrode catalyst layer 122 can be improved. When the catalyst support is porous, the ion conductivity of the reduction electrode catalyst layer 122 is particularly and greatly improved with the reduction electrode catalyst layer 122 containing an ionomer having proton conductivity. Examples of the ionomer having proton conductivity (i.e., a cation-exchanging ionomer) include perfluorosulfonic acid polymers such as NAFION (registered trademark) and FLEMION (registered trademark). The ion exchange capacity (IEC) of the cation exchange ionomer is preferably from 0.7 to 3 meq/g, more preferably from 1 to 2.5 meq/g, and most preferably from 1.2 to 2 meq/g. When the catalyst metal is supported by porous carbon (carbon support), the mass ratio I/C of the cation-exchanging ionomer (I) to the carbon support (C) is preferably from 0.1 to 2, more preferably from 0.2 to 1.5, and most preferably from 0.3 to 1.1. If the mass ratio I/C is less than 0.1, it may be difficult to obtain sufficient ion conductivity. On the other hand, if the mass ratio I/C is more than 2, the thickness of an ionomer coating over the catalyst metal is increased, and hence the contact of the aromatic compound, a reactant, with a catalyst-active site may be inhibited or the electrode activity may be decreased due to a decrease in the electron conductivity.

It is also preferable that the reduction catalyst is partially coated with the ionomer included in the reduction electrode catalyst layer 122. Thereby, three elements (aromatic compound, proton, electron), which are necessary for an electrochemical reaction in the reduction electrode catalyst layer 122, can be efficiently supplied to a reaction site.

The dense layer 142 is provided, of two major surfaces of the reduction electrode catalyst layer 122, in contact with one major surface thereof that is opposite to the other major surface that the electrolyte membrane 110 contacts. The dense layer 142 has a function in which a liquid aromatic compound and a hydride of an aromatic compound, which have a relatively low surface tension, are caused to pass through it, while liquid water having a relatively high surface tension is suppressed from passing through it.

The diffusion layer 140 is provided, of two major surfaces of the dense layer 142, in contact with one major surface thereof that is opposite to the other major surface that the reduction electrode catalyst layer 122 contacts. The diffusion layer 140 is formed of a porous material or fiber that causes the liquid aromatic compound and hydride of an aromatic compound, which have been supplied from the later-described separator 150, to permeate and that has good electron conductivity. Additionally, it is preferable that the material that forms the diffusion layer 140 has a high affinity with the aforementioned aromatic compounds. As the material that forms the diffusion layer 140, for example, carbon paper, and woven cloth or non-woven cloth of carbon, etc., can be used. When carbon paper is used as the material that forms the diffusion layer 140, the thickness of the diffusion layer 140 is preferably from 50 to 1000 µm, and more preferably from 100 to 500 µm. Additionally, it is preferable that the electron conductivity of the material that forms the diffusion layer 140 is 10⁻² S/cm or more.

Besides these, a material can be used for the diffusion layer 140, in which fine particles of a corrosion-resistant alloy such as Cr-Mo are solidified. In this case, it is preferable to perform, on the surface of the metal, a treatment such as a water repellent treatment, lipophilic treatment, or the like.

The separator 150 is laminated on one major surface of the diffusion layer 140, the one major surface being opposite to the electrolyte membrane 110. The separator 150 is formed of a carbon resin, or a corrosion-resistant alloy such as Cr-Ni-Fe, Cr-Ni-Mo-Fe, Cr-Mo-Nb-Ni, or Cr-Mo-Fe-W-Ni. One or more groove-like flow channels 152 are provided in the surface of the separator 150 on the diffusion layer 140 side. The liquid aromatic compound supplied from the organic substance storage tank 30 circulates through the flow channel 152, and the liquid aromatic compound permeates the liquid diffusion layer 140 from the flow channel 152. The form of the flow channel 152 is not particularly limited, but for example, a straight flow channel or a serpentine flow channel can be employed. When a metal material is used for the separator 150, the separator 150 may have a structure formed by sintering sphere-like or pellet-like metal fine powders.

The oxygen generating electrode 130 is provided in contact with the other major surface of the electrolyte membrane 110. The oxygen generating electrode 130 contains, as a catalyst, one or two or more metals or metal oxides, the metal (metals) being selected from the group consisting of Ru, Rh, Pd, Ir, and Pt. These catalysts are held on the surface of a protective layer covering a metal substrate having electron conductivity. When these catalysts are layered, the thickness of the catalyst layer is preferably from 0.1 to 10 µm, and more preferably from 0.2 to 5 µm. The metal substrate plays a role as a substrate for holding the catalyst and also functions as a current collecting member. The metal substrate is a molded body such as: a metal fiber (fiber diameter: e.g., from 10 to 30 µm) of a metal or an alloy whose major components are metals, the metal or metals being selected from the group consisting of Ti, Cr, Mn, Fe, Co, Ni, Cu, Zn, Nb, Mo, Ta, and W; a mesh (diameter: e.g., from 500 to 1000 µm); a sintered body of a porous metal; a foamed molded body (form); an expanded metal; or the like. The protective layer is an electron conductive layer made of one or two or more metals or metal oxides, the metal (metals) being selected from the group consisting of Nb, Mo, Ta, and W. The thickness of the protective layer is preferably from 0.05 to 2 µm, and more preferably from 0.1 to 1 µm. The protective layer can be produced, for example, by vapor deposition, ion plating, sputtering, chemical vapor deposition (CVD), electrolytic deposition, and coating, etc.

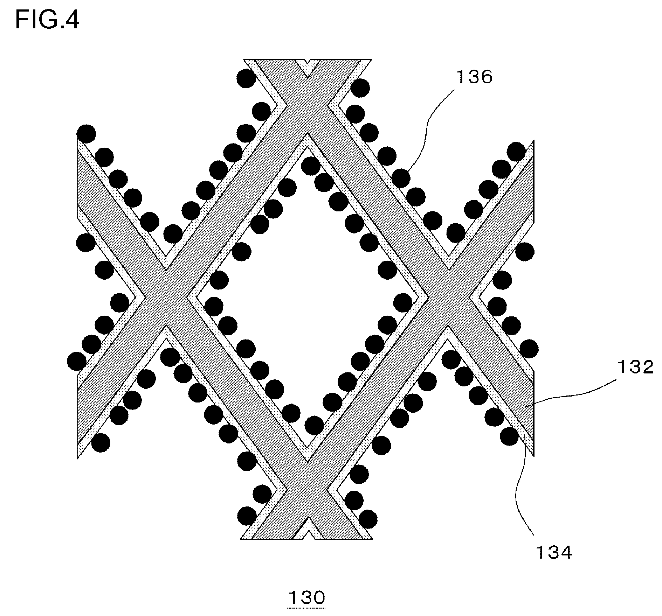

Fig. 4 is a schematic view illustrating an enlarged example of a sectional structure of the oxygen generating electrode 130. In the oxygen generating electrode 130 of this example, a catalyst 136 is held on the surface of a protective layer 134 covering a metal substrate 132. The metal substrate 132 is an expanded metal formed of a metal material such as Ti. The protective layer 134 is formed of one or two or more metals or metal oxides, the metal (metals) being selected from the group consisting of Nb, Mo, Ta, and W. The catalyst 136 is formed of one or two or more metals or metal oxides, the metal (metals) being selected from the group consisting of Ru, Rh, Pd, Ir, and Pt. Thus, by covering the metal substrate 132 with the protective layer 134, the durability of the metal substrate 132 can be improved.

As illustrated in Figs. 2 and 3, the current collector 160 electrically connected to the aforementioned oxygen generating electrode 130 is provided in the electrode unit 100. The current collector 160 has a substrate portion 162 and a connection portion 164, both formed of a metal having good electron conductivity, such as copper or aluminum.

The substrate portion 162 is a planar metal member installed so as to be spaced apart from the oxygen generating electrode 130 by a predetermined distance. The space between the substrate portion 162 and the oxygen generating electrode 130 is used for the circulation of the water supplied to the oxygen generating electrode 130.

The connection portion 164 of the present embodiment is a strip-shaped metal member whose short side is curved. A plurality of the connection portions 164 are provided in combination so as to be spaced apart from each other by predetermined intervals in a state in which one long side of each connection portion 164 is fixed to the substrate portion 162. The other long side thereof is electrically connected to the oxygen generating electrode 130. Each connection portion 164 and the oxygen generating electrode 130 may be fixed by welding, etc. Because the connection portion 164 has a shape in which the short side is curved, it can play a role of a spring. Accordingly, the contact between the connection portion 164 and the oxygen generating electrode 130 can be made more reliable by pressing the substrate portion 162 toward the oxygen generating electrode 130. The connection portion 164 is strip-shaped in the present embodiment, but the shape of the connection portion 164 is not limited thereto. The connection portion 164 may be formed, for example, by a spring-like wire, etc.

In the present embodiment, liquid water is supplied to the oxygen generating electrode 130, but humidified gas (for example, air) may be used instead of liquid water. In this case, the dew-point temperature of the humidified gas is preferably from room temperature to 100°C, and more preferably from 50 to 100°C.

When toluene is used as the aromatic compound, reactions in the electrode unit 100 are as follows. <Electrode Reaction at Oxygen Generating Electrode>

3H₂O → 1.5O₂ + 6H⁺ + 6e⁻ : E0 = 1.23 V

### <Electrode Reaction at Reduction Electrode>

Toluene + 6H⁺+ 6e⁻ → methylcyclohexane : E0 = 0.153 V (vs

### RHE)

In other words, the electrode reaction at the oxygen generating electrode and that at the reduction electrode proceed in parallel, and the protons generated by the electrolysis of water occurring due to the electrode reaction at the oxygen generating electrode 130 is supplied to the reduction electrode 120 via the electrolyte membrane 110. The proton supplied to the reduction electrode 120 is used for producing a hydride of an aromatic compound in the electrode reaction at the reduction electrode 120.

Because organic substances (aromatic compounds and hydrides thereof) are present at a high concentration on the reduction electrode 120 side in the aforementioned electrochemical reduction device 10, unlike in the conventional water electrolysis or brine electrolysis, there is the possibility that cross-leaking of the organic substances may occur on the oxygen generating electrode 130 side via the electrolyte membrane 110. Accordingly, substances that adversely affect the oxygen generating electrodes 130, such as the organic substances and compounds made by the organic substances being oxidized by the oxygen generating electrode 130 having a noble potential (e.g., oxygen-containing compounds such as an aldehyde and carboxylic acid), may be present on the oxygen generating electrode 130 side. In conventional water electrolysis and brine electrolysis, there are problems in which: in the electrode on the anode side, catalyst metals may aggregate, a substrate may be corroded, or a catalyst metal layer and the substrate may be peeled off from each other, by a small amount of organic substances; however, in the electrochemical reduction device 10, the concentration of the organic substances, to which the oxygen generating electrode 130 is exposed, is much higher than those in the existing water electrolysis and brine electrolysis (orders are different from each other). In order to industrially produce a hydride of an aromatic compound, it is required that the oxygen generating electrode 130 maintains, for a predetermined period of time, its electrode performance in a state in which large amounts of aromatic compounds and oxygen-containing compounds coexist together. Because the oxygen generating electrode 130 is exposed to an acid, aromatic compounds, and oxygen, etc., all of the metal substrate, the catalyst, and the interface between the metal substrate and the catalyst are likely to be deteriorated.

In the electrochemical reduction device 10 under such a situation, the aggregation of the catalysts 136, corrosion of the metal substrate 132, and peeling of the catalyst 136 from the metal substrate 132 can be suppressed under a condition in which large amounts of aromatic compounds and oxygen-containing compounds coexist together by holding the catalyst 136 in the metal substrate 132 covered with the protective layer 134 in the oxygen generating electrode 130. As a result, the electrode performance of the electrode unit can be maintained over a longer period of time. It is particularly preferable that the protective layer 134 contains at least one of Nb, Mo, Ta, W, and oxides of these metals, from the viewpoint of both catalyst activity and durability.

### Example

Hereinafter, examples of the present invention will be described, which do not intend to limit the scope of the invention, but are presented as preferred illustrative examples of the invention.

The configurations of electrode units of Example 1 and Comparative Example 1 are shown in Table 1. The durability of each of the electrode units was evaluated by using toluene as the aromatic compound.

**[Table 1]**

| | | EXAMPLE 1 | COMPARATIVE EXAMPLE 1 |
|---|---|---|---|
| DIFFUSION LAYER | MATERIAL | CARBON PAPER | CARBON PAPER |
| | MEAN FLOW PORE DIAMETER dm (*µ*m) | 42 | 42 |
| | ELECTRON CONDUCTIVITY (S/cm) | 100 | 100 |
| | THICKNESS (*µ*m) | 350 | 350 |
| DENSE LAYER | MATERIAL | RATIO OF VULCAN TO PTFE =1:1 | RATIO OF VULCAN TO PTFE =1:1 |
| | MEAN FLOW PORE DIAMETER dm(*µ*m) | 1 | 1 |
| | THICKNESS (*µ*m) | 10 | 10 |
| REDUCTION ELECTRODE CATALYST LAYER | MATERIAL | Pt (23 wt%), Ru (27 wt%) RATIO OF NAFION T0 CARBON BLACK = 0.8 : 1 | Pt (23 wt%), Ru (27 wt%) RATIO OF NAFION TO CARBON BLACK = 0.8 : 1 |
| | THICKNESS (*µ*m) | 300 | 300 |
| ELECTROLYTE MEMBRANE | MATERIAL | NAFION | NAFION |
| | THICKNESS (*µ*m) | 50 | 50 |
| OXYGEN GENERATING ELECTRODE | SUBSTRATE | SHEET-SHAPED TITANIUM FIBER (FIBER DIAMETER 25 *µ*m) | SHEET-SHAPED TITANIUM FIBER (FIBER DIAMETER 25 *µ*m) |
| | PROTECTIVE LAYER | TANTALUM OXIDE(THICKNESS 0.5 *µ*m) | - |
| | CATALYST | IrO₂ (THICKNESS 1 *µ*m) | IrO₂ (THICKNESS 1 *µ*m) |

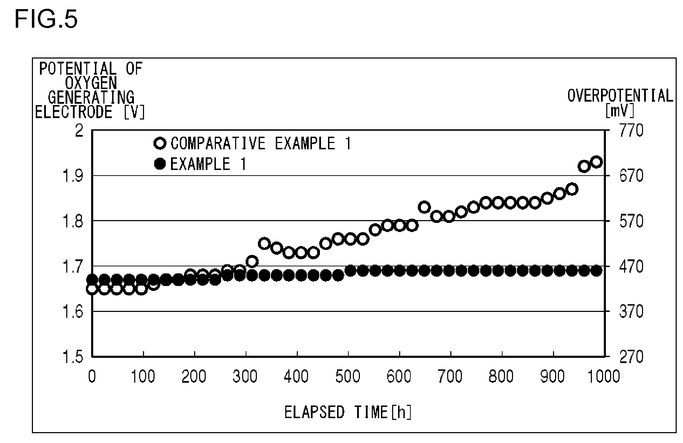

Fig. 5 is a graph showing transitions of the potentials and overpotentials of the oxygen generating electrodes in respective electrode units of Example 1 and Comparative Example 1. A certain concentration of toluene was supplied to each of the reduction electrodes. It has been confirmed that, as shown in Fig. 5, the electrode unit of Example 1, having a protective layer between a metal substrate and a catalyst, can maintain an electrode performance close to the initial performance over a longer period of time, in comparison with the electrode unit of Comparative Example 1, not having the protective layer. In Comparative Example 1, the ratio, at which the potential of the oxygen generating electrode was increased after the hydride-producing reaction was continued for 1000 hours, was 15.8%. On the other hand, the ratio was suppressed to 1.2% in Example 1. Accordingly. it has been confirmed that sufficient durability can be secured even if the target durability of the electrode unit is set, for example, to be 5%/1000 h. In Comparative Example 1, the ratio, at which the overpotential was increased after the hydride-producing reaction was continued for 1000 hours, was 61.9%. On the other hand, the ratio was suppressed to 4.5% in Example 1. Accordingly, it has been confirmed that sufficient durability can be secured even if the target durability of the electrode unit is set, for example, to be 10%/1000 h.

The present invention is not limited to the aforementioned embodiments, and various modifications, such as a design change, can be added thereto based on knowledge of those skilled in the art, and any embodiment to which such modifications are added can also be included in the scope of the present invention.

### Description of Reference Numerals

- 10: ELECTROCHEMICAL REDUCTION DEVICE
- 20: POWER CONTROLLER
- 30: ORGANIC SUBSTANCE STORAGE TANK
- 40: WATER STORAGE TANK
- 50: GAS-WATER SEPARATION UNIT
- 60: CONTROLLER
- 100: ELECTRODE UNIT
- 112: REFERENCE ELECTRODE
- 113: CURRENT DETECTION UNIT
- 114: VOLTAGE DETECTION UNIT
- 110: ELECTROLYTE MEMBRANE
- 120: REDUCTION ELECTRODE
- 122: REDUCTION ELECTRODE CATALYST LAYER
- 130: OXYGEN GENERATING ELECTRODE
- 132: METAL SUBSTRATE
- 134: PROTECTIVE LAYER
- 136: CATALYST
- 140: DIFFUSION LAYER
- 142: DENSE LAYER
- 150: SEPARATOR
- 160: CURRENT COLLECTOR

### Industrial Applicability

The present invention can be used in an electrochemical reduction device.

## Claims

1. An electrochemical reduction device comprising:
an electrolyte membrane having proton conductivity;
a reduction electrode that is provided in contact with one major surface of the electrolyte membrane and contains a reduction catalyst for producing a hydride of an aromatic compound;
an oxygen generating electrode provided in contact with the other major surface of the electrolyte membrane;
a raw material supplier that supplies the aromatic compound in a liquid state to the reduction electrode;
a moisture supplier that supplies water or humidified gas to the oxygen generating electrode; and
a power controller that externally applies an electric field such that the reduction electrode has an electronegative potential and the oxygen generating electrode has an electropositive potential, wherein
the oxygen generating electrode has: an electron conductive metal substrate; a protective layer that contains one or two or more metals or metal oxides, the metal (metals) being selected from the group consisting of Nb, Mo, Ta, and W, and that covers the metal substrate; and a catalyst that contains one or two or more metals or metal oxides, the metal (metals) being selected from the group consisting of Ru, Rh, Pd, Ir, and Pt, and that is held on the surface of the protective layer.

2. The electrochemical reduction device according to claim 1, wherein
the metal substrate is a molded body selected from the group consisting of a metal fiber, a sintered body of a metal porous body, a foamed molded body, and an expanded metal.

3. The electrochemical reduction device according to claim 1 or claim 2, wherein
the metal substrate contains titanium.

4. The electrochemical reduction device according to any one of claims 1 to 3, wherein
the catalyst is iridium oxide.
